# EUROPÄISCHE PATENTSCHRIFT

(11) **EP 3 362 693 B1**
(45) Veröffentlichungstag und Bekanntmachung des Hinweises auf die Patenterteilung: **25.08.2021**
(21) Anmeldenummer: 16775638.6
(22) Anmeldetag: 28.09.2016
(51) Int. Cl.: F16B 17/00, F16B 2/00

(54) **VERBINDUNGSSYSTEM UND VERFAHREN ZUM VERBINDEN VON WENIGSTENS ZWEI BAUTEILEN**
CONNECTION SYSTEM, AND METHOD FOR CONNECTING AT LEAST TWO COMPONENTS
SYSTÈME DE LIAISON ET PROCÉDÉ DE LIAISON D'AU MOINS DEUX COMPOSANTS

(30) Priorität: 13.10.2015 DE 102015219756
(43) Veröffentlichungstag der Anmeldung: 22.08.2018
(73) Patentinhaber: Bayerische Motoren Werke Aktiengesellschaft, 80809 München (DE)
(72) Erfinder: FREITAG, Norman, 83404 Ainring (DE)
(86) Internationale Anmeldenummer: PCT/EP2016/073051
(87) Internationale Veröffentlichungsnummer: WO 2017/063875

(56) Entgegenhaltungen:
- DE-A1-102009 035 621
- DE-A1-102009 048 704
- DE-T2- 60 301 192
- US-A1- 2004 074 062
- US-A1- 2008 257 094
- US-B1- 6 598 274

## Beschreibung

Die Erfindung betrifft ein Verbindungssystem zum Verbinden von wenigstens zwei Bauteilen, insbesondere eines Kraftfahrzeugs, aufweisend wenigstens eine Verbindung zwischen den Bauteilen, insbesondere eines Kraftfahrzeugs, aufweisend wenigstens eine an einem der Bauteile angeordnete und/oder ausgebildete, wenigstens eine Verbindungsfläche der Verbindung bereitstellende Verbindungseinheit.

Ferner betrifft die Erfindung ein Verfahren zum Verbinden von wenigstens zwei Bauteilen, insbesondere eines Kraftfahrzeugs.

Um zwei Bauteile miteinander zu verbinden, können zerstörungsfrei lösbare und nicht zerstörungsfrei lösbare mechanische Verbindungsarten verwendet werden. Eine zerstörungsfrei lösbare Verbindung kann beispielsweise durch eine Schraubverbindung, einen Klettverschluss oder dergleichen verwirklicht werden, wohingegen eine nicht zerstörungsfrei lösbare Verbindung beispielsweise durch eine Nietverbindung, eine Schweißverbindung, eine Klebeverbindung oder dergleichen realisiert werden kann. Generell lassen sich zerstörungsfrei lösbare Verbindungen durch eine Umkehr des jeweiligen Verbindungsvorganges wieder lösen, wohingegen nicht zerstörungsfrei lösbare Verbindungen nur durch Zerstören des jeweiligen Verbindungsmittels und/oder der entsprechend miteinander verbundenen Bauteile lösbar ist. Nicht zerstörungsfrei lösbare Verbindungen ermöglichen in der Regel keinen Austausch beschädigter Teile und erschweren ein Recycling von einzelnen Verbindungskomponenten.

DE 10 2012 112 965 A1 betrifft einen Gegenstand mit mindestens einer Oberfläche mit schaltbarer Adhäsion. Die Oberfläche umfasst mindestens eine Formgedächtnislegierung, die mindestens teilweise mit mindestens einem Polymer beschichtet ist. Die Formgedächtnislegierung kann eine Oberflächenstruktur ausbilden, wodurch sich die Oberfläche des Gegenstandes und dadurch die zur Adhäsion verfügbare Fläche bzw. die Haftfähigkeit der Oberfläche verändern.

DE 10 2006 050 365 A1 offenbart eine strukturierte Oberfläche eines Festkörpers, die eine Vielzahl von Vorsprüngen, die eine Kontaktfläche mit einer Haftfähigkeit in Bezug auf eine angrenzende Umgebung bilden, und eine Trägerschicht, auf der die Vorsprünge angeordnet sind, umfasst. Eigenschaften der Vorsprünge und/oder der Trägerschicht sind derart gezielt veränderlich, dass die Haftfähigkeit der Kontaktfläche einstellbar ist.

US 6 773 535 B1 offenbart eine Verbindung zwischen zwei Bauteilen, wobei zwischen Verbindungsabschnitten der Bauteile ein Formgedächtnislegierungselement angeordnet ist, das mit beiden Verbindungsabschnitten verklebt ist. Das Formgedächtnislegierungselement wird in einem gespannten Zustand mit den Verbindungsabschnitten verklebt. Zum Trennen der Verbindung wird das Formgedächtnislegierungselement durch eine Erhöhung der Temperatur des Formgedächtnislegierungselements aktiv in einen entspannten Zustand überführt, wodurch die Verklebungen zwischen dem Formgedächtnislegierungselement und den Verbindungsabschnitten geschwächt werden. Dies ermöglicht ein Trennen der Bauteile voneinander. Das Lösen der Verbindung erfolgt nicht zerstörungsfrei.

Weitere bekannte Verbindungssysteme und Verfahren offenbaren die DE 603 01 192 T2 und die US 2008/257094 A1.

Eine Aufgabe der Erfindung ist es, eine verbesserte zerstörungsfrei lösbare Verbindung zwischen Bauteilen bereitzustellen.

Diese Aufgabe wird durch die unabhängigen Patentansprüche gelöst. Vorteilhafte Ausgestaltungen sind insbesondere in den abhängigen Patentansprüchen wiedergegeben, die jeweils für sich genommen oder in unterschiedlicher Kombination miteinander einen Aspekt der Erfindung darstellen können.

Eine Verbindung zwischen den Bauteilen, insbesondere eines Kraftfahrzeugs, gemäß einem erfindungsgemäßen Verbindungssystem, umfasst wenigstens eine an einem der Bauteile angeordnete und/oder ausgebildete, wenigstens eine Verbindungsfläche der Verbindung bereitstellende Verbindungseinheit, wobei wenigstens eine Eigenschaft der Verbindungseinheit derart gezielt veränderbar ist, dass eine Haftfähigkeit der Verbindungsfläche einstellbar ist. Erfindungsgemäß kann die Haftfähigkeit der Verbindungsfläche der Verbindungseinheit und hierdurch die mit der Verbindung erzeugte Verbindungskraft variiert werden. Hierdurch ist es möglich, während der Montage zunächst die Haftfähigkeit der Verbindungsfläche möglichst gering zu halten, was eine einfache und exakte Positionierung der Bauteile in ihren jeweiligen Verbindungsstellungen relativ zueinander ermöglicht. Befinden sich die Bauteile in ihren Verbindungsstellungen, kann die Haftfähigkeit der Verbindungsfläche erhöht werden, so dass die Bauteile fest miteinander verbunden sind. Zum zerstörungsfreien Lösen der Verbindung kann die Haftfähigkeit der Verbindungsfläche gezielt verringert werden.

Es ist beispielsweise ein Verbindungsprinzip bekannt, bei dem wenigstens eine Metallkugel an einem Bauteil angeschweißt wird, an die ein weiteres Bauteil angeklipst oder auf die das weitere Bauteil aufgeschoben werden kann. Um eine sichere und dauerhafte Kraftübertragung über die der so hergestellte Bauteilverbindung garantieren zu können, müssen die beiden miteinander verbundenen Bauteile zusätzlich noch verschraubt, zusammengeklebt oder anderweitig fest miteinander verbunden werden. Wird das weitere Bauteil auf die Metallkugel aufgeschoben, kann es jedoch nicht mit dem die Metallkugel aufweisenden Bauteil verklebt werden, da sonst während des Fügeprozesses der Klebstoff vom Bauteil herunter geschoben werden würde. Daher kann eine zusätzliche Fixierung der miteinander verbundenen Bauteile herkömmlich lediglich über eine Verschraubung erreicht werden, was aber bei Sicht- und Dekorationsbauteilen unvorteilhaft ist, da die Schraubenköpfe entweder sichtbar sind oder aufwändig versenkt und abgedeckt werden müssen. Im Gegensatz hierzu kann durch eine oben beschriebene erfindungsgemäße Variation bzw. Einstellung der Haftfähigkeit der Verbindungsfläche die Haftfähigkeit der Verbindungsfläche während der Montage verringert bzw. gewissermaßen ausgeschaltet und das Bauteil bequem auf die Metallkugeln aufgeschoben werden. Befinden sich die Bauteile anschließend in ihren Verbindungsstellungen relativ zueinander, kann die Haftfähigkeit der Verbindungsfläche erhöht bzw. gewissermaßen eingeschaltet werden, wodurch die beiden Bauteile sicher und dauerhaft miteinander verbunden sind.

Eine Verbindung eines erfindungsgemäßen Verbindungssystems kann so gut wie alle bisherigen Verbindungsarten ablösen. Die schaltbare Haftfähigkeit der Verbindungsfläche bietet den Vorteil, eine sichere und dauerhafte Verbindung der Bauteile zu gewährleisten, ohne dass störende Schraubenköpfe sichtbar sind. Gleichzeitig ist die Verbindung, insbesondere im Gegensatz zu einer Klebverbindung, leicht und zu einem gewünschten Zeitpunkt lösbar, wodurch ein umfangreicheres Recycling von Komponenten von Bauteilverbindungen als bisher möglich ist.

Zusätzlich erleichtert die Verbindung des erfindungsgemäßen Verbindungssystems durch die schaltbare Haftfähigkeit der Verbindungsfläche gerade im Service und Aftersales-Bereich enorm die Montagearbeit und insbesondere den Austausch von beschädigten Bauteilen. Insbesondere können mit der Verbindung des erfindungsgemäßen Verbindungssystems ganz neue Verbindungsmöglichkeiten zwischen Bauteilen geschaffen werden, da auch bislang nicht zerstörungsfrei lösbar miteinander verbundene Bauteile bei Einsatz der Verbindung des erfindungsgemäßen Verbindungssystems leicht und schnell ausgetauscht werden können.

Die Verbindungseinheit kann derart ausgebildet sein, dass die Haftfähigkeit der Verbindungsfläche durch eine gezielte, aktive Beaufschlagung des Verbindungselements mit wenigstens einer äußeren physikalischen und/oder chemische Einflussgröße verringert wird bzw. dass die gewünschte höhere Haftfähigkeit der Verbindungsfläche ohne eine solche aktive Beaufschlagung des Verbindungselements gegeben ist.

Mit einer Verbindung eines erfindungsgemäßen Verbindungssystems können auch drei oder mehrere Bauteile miteinander verbunden werden. Insbesondere können mit einer Verbindung eines erfindungsgemäßen Verbindungssystems Bauteile eines Kraftfahrzeugs, insbesondere

Karosseriebauteile, miteinander verbunden werden.

Die Verbindungseinheit kann aus einer Formgedächtnislegierung hergestellt sein. Es können auch zwei oder mehrere, insbesondere physikalische bzw. geometrische Eigenschaften der Verbindungseinheit derart gezielt veränderbar sein, dass eine Haftfähigkeit der Verbindungsfläche einstellbar ist. Die Verbindungseinheit kann auch zwei oder mehrere Verbindungsflächen bereitstellen, deren Haftfähigkeit gemeinsam oder individuell einstellbar ist. Es können auch zwei oder mehrere Verbindungseinheiten an einem Bauteil angeordnet sein.

Die Anordnung und/oder Ausbildung der Verbindungseinheit an dem Bauteil kann in einem Herstell-, Umform- und/oder Montageprozess durchgeführt werden. Die Verbindungseinheit kann dabei durch einen Auftragsprozess, beispielsweise Walzen, Drucken, Sprühen, Kleben, Anspritzen, Umspritzen, Angießen, Umgießen, ein additives Fertigungsverfahren oder dergleichen, durch einen Aktivierungsprozess, beispielsweise durch Einwirkung einer Temperatur, einer elektromagnetischen Strahlung, insbesondere Licht, eines chemischen Mediums, eines mechanischen Drucks, eines elektrischen Felds oder eines magnetischen Felds, oder durch einen Abtragprozess, beispielsweise mechanisches Abtragen, thermisches Abtragen, chemisches Abtragen oder elektrochemisches Abtragen, an dem Bauteil angeordnet bzw. ausgebildet werden.

Ein erfindungsgemäßes Verbindungssystem zum Verbinden von wenigstens zwei Bauteilen, insbesondere eines Kraftfahrzeugs, umfasst wenigstens eine Verbindung nach einer der vorgenannten Ausgestaltungen oder einer beliebigen Kombination derselben und wenigstens eine Steuer- und/oder Regeleinheit, die eingerichtet ist, die Verbindungseinheit der Verbindung derart gezielt mit wenigstens einer äußeren Einflussgröße zu beaufschlagen, dass die wenigstens eine Eigenschaft der Verbindungseinheit zum Einstellen der Haftfähigkeit der Verbindungsfläche der Verbindungseinheit gezielt veränderbar ist.

Mit dem Verbindungssystem sind die oben mit Bezug auf die Verbindung genannten Vorteile entsprechend verbunden. Die äußere Einflussgröße kann physikalischer und/oder chemischer Natur sein. Beispielsweise kann die äußere Einflussgröße ein elektrisches Feld, ein magnetisches Feld, eine elektromagnetische Strahlung, ein mechanischer Druck, ein chemisches Medium oder eine Temperatur sein. Auch können zwei oder mehrere entsprechende äußere Einflussgrößen miteinander kombiniert werden, um die Haftfähigkeit der Verbindungsfläche einstellen zu können. Die äußere Einflussgröße kann entweder aus einer Umgebungssituation im Fahrbetrieb eines Kraftfahrzeugs, beispielsweise von einer Lufttemperatur am Kühler des Kraftfahrzeugs, aus einer aktiven Beaufschlagung der Verbindungseinheit mit der äußeren Einflussgröße mittels einer elektronischen Fahrzeugsteuereinheit oder aus einer Kombination hieraus stammen.

Gemäß einer vorteilhaften Ausgestaltung ist die Steuer- und/oder Regeleinheit eingerichtet, die Verbindungseinheit in Abhängigkeit eines erfassten momentanen oder eines vorbestimmten Fahrzustands des Kraftfahrzeugs gezielt mit der wenigstens einen äußeren Einflussgröße zu beaufschlagen. Hierdurch kann beispielsweise im Fahrbetrieb des Kraftfahrzeugs eine lokale Steifigkeit des Kraftfahrzeugs gesteuert und so die Fahrdynamik des Kraftfahrzeugs verbessert werden. Die über die Verbindung miteinander verbundenen Bauteile können beispielsweise in einem Komfortmodus, also einem vorbestimmten Fahrzustand, nicht oder nur gering über die Verbindung miteinander verbunden sein und somit eine größere Nachgiebigkeit der Karosserie und mehr Komfort für den Fahrer bieten. Hierzu kann die Haftfähigkeit der Verbindungsfläche gezielt verringert werden. In einem Sportmodus, also einem weiteren vorbestimmten Fahrzustand, können diese Bauteile durch eine erhöhte Haftfähigkeit der Verbindungsfläche zu einer Baugruppe mit höherer Steifigkeit verbunden werden, wodurch eine bessere und sportlichere Fahrdynamik erzielt wird. Die Verbindung ermöglicht somit ein flexibles Verbinden bzw. Lösen von zwei über die Verbindung miteinander verbundenen Bauteilen im Fahrbetrieb eines Kraftfahrzeugs. Durch ein partielles Lösen von Verbindungen vor, während und/oder nach dem Fahrbetrieb des Kraftfahrzeugs kann ein verspannungsarmer Toleranzausgleich von zwei über die Verbindung miteinander verbundenen Bauteilen erzielt werden. Des Weiteren können unterschiedliche Ausdehnungen von über die Verbindung miteinander verbundenen Bauteilen durch zeitweises Lösen der Verbindung ausgeglichen werden, wodurch Spannungen bzw. Verformungen der Bauteile, beispielsweise vor bzw. nach dem Fahrbetrieb in einer Parksituation, reduziert werden können. Die Variation der Haftfähigkeit der Verbindungsfläche kann alternativ oder additiv automatisiert in Abhängigkeit des jeweilig erfassten momentanen Fahrzustands des Kraftfahrzeugs erfolgen.

Erfindungsgemäß ist die Steuer- und/oder Regeleinheit eingerichtet, die Verbindungseinheit in Abhängigkeit eines erfassten momentanen akustischen Verhaltens des Kraftfahrzeugs gezielt mit der wenigstens einen äußeren Einflussgröße zu beaufschlagen. Hierdurch kann eine akustische Optimierung des Kraftfahrzeugs erfolgen, indem Geräusche reduziert werden. Insbesondere kann die Verbindung durch ein temporäres Verbinden bzw. Lösen von zwei über die Verbindung miteinander verbundenen Bauteilen als Schaltelement in einem Regelkreis verwendet werden, wodurch neue Möglichkeiten in der akustischen Gestaltung eines Kraftfahrzeugs geschaffen werden. Die Variation der Haftfähigkeit der Verbindungsfläche kann automatisiert in Abhängigkeit des jeweilig erfassten momentanen akustischen Verhaltens des Kraftfahrzeugs erfolgen.

Ein erfindungsgemäßes Verfahren zum Verbinden von wenigstens zwei Bauteilen, insbesondere eines Kraftfahrzeugs, umfasst die Schritte:
- Anordnen und/oder Ausbilden von wenigstens einer Verbindungseinheit an einem der nicht miteinander verbundenen Bauteile, die wenigstens eine Verbindungsfläche bereitstellt und von der wenigstens eine Eigenschaft durch eine gezielte Beaufschlagung mit wenigstens einer äußeren Einflussgröße derart veränderbar ist, dass eine Haftfähigkeit der Verbindungsfläche einstellbar ist;
- Verringern der Haftfähigkeit der Verbindungsfläche auf eine vorbestimmte erste Höhe durch eine gezielte Beaufschlagung der Verbindungseinheit mit einem vorbestimmten ersten Wert der wenigstens einen äußeren Einflussgröße;
- Positionieren der miteinander zu verbindenden Bauteile in ihren jeweiligen Verbindungsstellungen derart relativ zueinander, dass die Verbindungsfläche das jeweilig andere Bauteil unmittelbar kontaktiert; und
- Erhöhen der Haftfähigkeit der Verbindungsfläche auf ein vorbestimmte zweite Höhe, die größer als die erste Höhe ist, durch eine gezielte Beaufschlagung der Verbindungseinheit mit einem vorbestimmten zweiten Wert der wenigstens einen äußeren Einflussgröße, wobei sich der zweite Wert von dem ersten Wert unterscheidet.

Mit dem Verfahren sind die oben mit Bezug auf die Verbindung und das Verbindungssystem genannten Vorteile entsprechend verbunden. Das Anordnen und/oder Ausbilden der Verbindungseinheit an einem der nicht miteinander verbundenen Bauteile kann in einem Herstell-, Umform- und/oder Montageprozess durchgeführt werden. Die Verbindungseinheit kann dabei durch einen Auftragsprozess, einen Aktivierungsprozess oder einen Abtragprozess an dem Bauteil angeordnet bzw. ausgebildet werden. Unter einem ersten Wert und einem zweiten Wert der wenigstens einen äußeren physikalischen und/oder chemischen Einflussgröße ist im Rahmen der Erfindung beispielsweise ein momentaner Absolutwert der Einflussgröße, beispielsweise ein Druckwert oder ein Temperaturwert, oder eine bestimmte Eigenschaft, beispielsweise eine Frequenz einer elektromagnetischen Strahlung oder chemische Eigenschaft eines Mediums, der Einflussgröße zu verstehen.

Gemäß einer vorteilhaften Ausgestaltung erfolgen die gezielte Beaufschlagung der Verbindungseinheit mit einem vorbestimmten ersten Wert der wenigstens einen äußeren Einflussgröße aktiv und die gezielte Beaufschlagung der Verbindungseinheit mit einem vorbestimmten zweiten Wert der wenigstens einen äußeren Einflussgröße passiv. Hierdurch erfolgt das temporäre, zumindest teilweise Lösen der Verbindung bzw. Verringern der Haftfähigkeit der Verbindungsfläche aktiv, während die temporäre Stärkung der Verbindung bzw. das Erhöhen der Haftfähigkeit der Verbindungsfläche passiv erfolgt.

Nach einer weiteren vorteilhaften Ausgestaltung wird die Verbindungseinheit nach erfolgtem Verbinden der Bauteile miteinander in Abhängigkeit eines erfassten momentanen oder eines vorbestimmten Fahrzustands des Kraftfahrzeugs gezielt mit der wenigstens einen äußeren Einflussgröße beaufschlagt. Mit dieser Ausgestaltung sind die oben mit Bezug auf die entsprechende Ausgestaltung des Verbindungssystems genannten Vorteile entsprechend verbunden. Insbesondere kann hierdurch die Steifigkeit des Kraftfahrzeugs in Abhängigkeit eines gewünschten Fahrmodus des Kraftfahrzeugs variiert werden.

Die Erfindung sieht vor, dass die Verbindungseinheit nach erfolgtem Verbinden der Bauteile miteinander in Abhängigkeit eines erfassten momentanen akustischen Verhaltens des Kraftfahrzeugs gezielt mit der wenigstens einen äußeren Einflussgröße beaufschlagt wird. Damit sind die oben mit Bezug auf die Ausgestaltung des Verbindungssystems genannten Vorteile entsprechend verbunden. Insbesondere kann hierdurch das Kraftfahrzeug akustisch optimiert werden. Weitere Einzelheiten, Merkmale und Vorteile der Erfindung ergeben sich aus der nachfolgenden Beschreibung und den Figuren. Es zeigen:
- Figur 1: eine schematische Darstellung eines Ausführungsbeispiels für ein erfindungsgemäßes Verbindungssystem; und
- Figur 2: eine Darstellung eines beispielhaften Ablaufs für ein erfindungsgemäßes Verfahren.

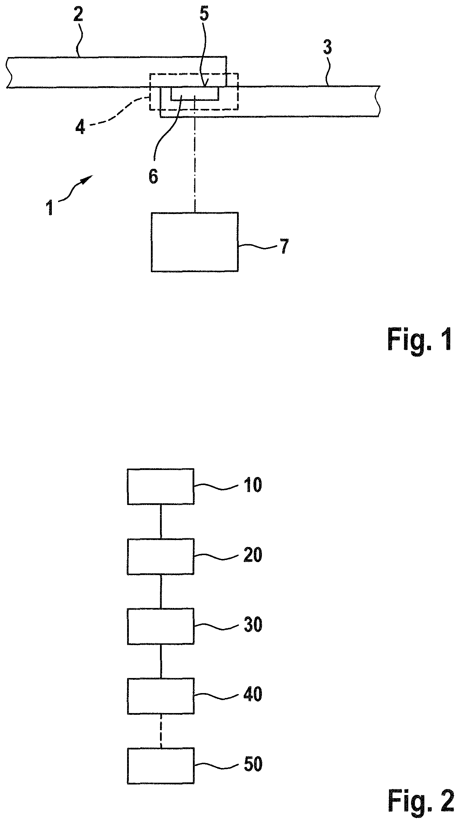

Figur 1 zeigt eine schematische Darstellung eines Ausführungsbeispiels für ein erfindungsgemäßes Verbindungssystem 1 zum Verbinden von zwei Bauteilen 2 und 3 eines nicht weitergehender gezeigten Kraftfahrzeugs. Das Verbindungssystem 1 umfasst eine Verbindung 4 zwischen den Bauteilen 2 und 3. Die Verbindung 4 umfasst eine an dem Bauteil 3 angeordnete und/oder ausgebildete, wenigstens eine Verbindungsfläche 5 der Verbindung 4 bereitstellende Verbindungseinheit 6. Wenigstens eine Eigenschaft der Verbindungseinheit 6 ist derart gezielt veränderbar, dass eine Haftfähigkeit der Verbindungsfläche 5 einstellbar ist.

Des Weiteren umfasst das Verbindungssystem 1 eine Steuer- und/oder Regeleinheit 7, die eingerichtet ist, die Verbindungseinheit 6 der Verbindung 4 derart gezielt mit wenigstens einer äußeren Einflussgröße zu beaufschlagen, dass die wenigstens eine Eigenschaft der Verbindungseinheit 6 zum Einstellen der Haftfähigkeit der Verbindungsfläche 5 der Verbindungseinheit 6 gezielt veränderbar ist.

Die Steuer- und/oder Regeleinheit 7 kann eingerichtet sein, die Verbindungseinheit 6 in Abhängigkeit eines erfassten momentanen oder eines vorbestimmten Fahrzustands des Kraftfahrzeugs gezielt mit der wenigstens einen äußeren Einflussgröße zu beaufschlagen. Die Steuer- und/oder Regeleinheit 7 ist eingerichtet, die Verbindungseinheit 6 in Abhängigkeit eines erfassten momentanen akustischen Verhaltens des Kraftfahrzeugs gezielt mit der wenigstens einen äußeren Einflussgröße zu beaufschlagen.

Figur 2 zeigt eine Darstellung eines beispielhaften Ablaufs für ein erfindungsgemäßes Verfahren zum Verbinden von wenigstens zwei Bauteilen eines Kraftfahrzeugs. Zur Durchführung des Verfahrens kann ein in Figur 1 gezeigtes Verbindungssystem verwendet werden.

In einem ersten Montageschritt 10 wird wenigstens eine Verbindungseinheit an einem der nicht miteinander verbundenen Bauteile angeordnet und/oder ausgebildet, die wenigstens eine Verbindungsfläche bereitstellt und von der wenigstens eine Eigenschaft durch eine gezielte Beaufschlagung mit wenigstens einer äußeren Einflussgröße derart veränderbar ist, dass eine Haftfähigkeit der Verbindungsfläche einstellbar ist.

In einem zweiten Montageschritt 20 wird die Haftfähigkeit der Verbindungsfläche auf eine vorbestimmte erste Höhe durch eine gezielte Beaufschlagung der Verbindungseinheit mit einem vorbestimmten ersten Wert der wenigstens einen äußeren Einflussgröße verringert.

In einem dritten Montageschritt 30 werden die miteinander zu verbindenden Bauteile in ihren jeweiligen Verbindungsstellungen derart relativ zueinander positioniert, dass die Verbindungsfläche das jeweilig andere Bauteil unmittelbar kontaktiert.

In einem vierten Montageschritt 40 wird die Haftfähigkeit der Verbindungsfläche auf ein vorbestimmte zweite Höhe, die größer als die erste Höhe ist, durch eine gezielte Beaufschlagung der Verbindungseinheit mit einem vorbestimmten zweiten Wert der wenigstens einen äußeren Einflussgröße erhöht, wobei sich der zweite Wert von dem ersten Wert unterscheidet. Hierbei können die gezielte Beaufschlagung der Verbindungseinheit mit einem vorbestimmten ersten Wert der wenigstens einen äußeren Einflussgröße aktiv und die gezielte Beaufschlagung der Verbindungseinheit mit einem vorbestimmten zweiten Wert der wenigstens einen äußeren Einflussgröße passiv erfolgen. Anschließend sind die Bauteile fest miteinander verbunden.

In einem späteren Verfahrensschritt 50 wird die Verbindungseinheit nach erfolgtem Verbinden der Bauteile miteinander in Abhängigkeit eines erfassten momentanen akustischen Verhaltens des Kraftfahrzeugs gezielt mit der wenigstens einen äußeren Einflussgröße beaufschlagt. Additiv kann in dem Verfahrensschritt 50 die Verbindungseinheit nach erfolgtem Verbinden der Bauteile miteinander in Abhängigkeit eines erfassten momentanen oder eines vorbestimmten Fahrzustands des Kraftfahrzeugs gezielt mit der wenigstens einen äußeren Einflussgröße beaufschlagt werden.

### Bezugszeichenliste:

- 1: Verbindungssystem
- 2: Bauteil
- 3: Bauteil
- 4: Verbindung
- 5: Verbindungsfläche
- 6: Verbindungseinheit
- 7: Steuer- und/oder Regeleinheit
- 10: erster Montageschritt
- 20: zweiter Montageschritt
- 30: dritter Montageschritt
- 40: vierter Montageschritt
- 50: Verfahrensschritt

## Patentansprüche

1. Verbindungssystem (1) zum Verbinden von wenigstens zwei Bauteilen (2, 3), insbesondere eines Kraftfahrzeugs, aufweisend
- wenigstens eine Verbindung (4) zwischen den Bauteilen (2, 3), die wenigstens ein Bauteil (2, 3) und wenigstens eine an dem Bauteil (2, 3) angeordnete und/oder ausgebildete, wenigstens eine Verbindungsfläche (5) der Verbindung (4) bereitstellende Verbindungseinheit (6) aufweist, wobei wenigstens eine Eigenschaft der Verbindungseinheit (6) derart gezielt veränderbar ist, dass eine Haftfähigkeit der Verbindungsfläche (5) einstellbar ist, und
- wenigstens eine Steuer- und/oder Regeleinheit (7), die eingerichtet ist, die Verbindungseinheit (6) der Verbindung (4) derart gezielt mit wenigstens einer äußeren Einflussgröße zu beaufschlagen, dass die wenigstens eine Eigenschaft der Verbindungseinheit (6) zum Einstellen der Haftfähigkeit der Verbindungsfläche (5) der Verbindungseinheit (6) gezielt veränderbar ist, **dadurch gekennzeichnet, dass** die Steuer- und/oder Regeleinheit (7) eingerichtet ist, die Verbindungseinheit (6) in Abhängigkeit eines erfassten momentanen akustischen Verhaltens des Kraftfahrzeugs gezielt mit der wenigstens einen äußeren Einflussgröße zu beaufschlagen.

2. Verbindungssystem (1) nach Anspruch 1, **dadurch gekennzeichnet, dass** die Steuer- und/oder Regeleinheit (7) eingerichtet ist, die Verbindungseinheit (6) in Abhängigkeit eines erfassten momentanen oder eines vorbestimmten Fahrzustands des Kraftfahrzeugs gezielt mit der wenigstens einen äußeren Einflussgröße zu beaufschlagen.

3. Verfahren zum Verbinden von wenigstens zwei Bauteilen (2, 3), insbesondere eines Kraftfahrzeugs, aufweisend die Schritte:
- Anordnen und/oder Ausbilden von wenigstens einer Verbindungseinheit (6) an einem der nicht miteinander verbundenen Bauteile (2, 3), die wenigstens eine Verbindungsfläche (5) bereitstellt und von der wenigstens eine Eigenschaft durch eine gezielte Beaufschlagung mit wenigstens einer äußeren Einflussgröße derart veränderbar ist, dass eine Haftfähigkeit der Verbindungsfläche (5) einstellbar ist;
- Verringern der Haftfähigkeit der Verbindungsfläche (5) auf eine vorbestimmte erste Höhe durch eine gezielte Beaufschlagung der Verbindungseinheit (6) mit einem vorbestimmten ersten Wert der wenigstens einen äußeren Einflussgröße;
- Positionieren der miteinander zu verbindenden Bauteile (2, 3) in ihren jeweiligen Verbindungsstellungen derart relativ zueinander, dass die Verbindungsfläche (5) das jeweilig andere Bauteil (2, 3) unmittelbar kontaktiert; und
- Erhöhen der Haftfähigkeit der Verbindungsfläche (5) auf ein vorbestimmte zweite Höhe, die größer als die erste Höhe ist, durch eine gezielte Beaufschlagung der Verbindungseinheit (6) mit einem vorbestimmten zweiten Wert der wenigstens einen äußeren Einflussgröße, wobei sich der zweite Wert von dem ersten Wert unterscheidet, **dadurch gekennzeichnet,**
- **dass** die Verbindungseinheit (6) nach erfolgtem Verbinden der Bauteile (2, 3) miteinander in Abhängigkeit eines erfassten momentanen akustischen Verhaltens des Kraftfahrzeugs gezielt mit der wenigstens einen äußeren Einflussgröße beaufschlagt wird.

4. Verfahren nach Anspruch 3, **dadurch gekennzeichnet, dass** die gezielte Beaufschlagung der Verbindungseinheit (6) mit einem vorbestimmten ersten Wert der wenigstens einen äußeren Einflussgröße aktiv und die gezielte Beaufschlagung der Verbindungseinheit (6) mit einem vorbestimmten zweiten Wert der wenigstens einen äußeren Einflussgröße passiv erfolgen.

5. Verfahren nach Anspruch 3 oder 4, **dadurch gekennzeichnet, dass** die Verbindungseinheit (6) nach erfolgtem Verbinden der Bauteile (2, 3) miteinander in Abhängigkeit eines erfassten momentanen oder eines vorbestimmten Fahrzustands des Kraftfahrzeugs gezielt mit der wenigstens einen äußeren Einflussgröße beaufschlagt wird.

## Claims

1. Connection system (1) for the connection of at least two components (2, 3), in particular of a motor vehicle, having
- at least one connection (4) between the components (2, 3), which connection (4) has at least one component (2, 3) and at least one connection unit (6) which is arranged and/or configured on the component (2, 3) and provides at least one connection surface (5) of the connection (4), at least one property of the connection unit (6) being variable in a targeted manner in such a way that an adhesion capability of the connecting surface (5) can be set, and
- at least one control and/or regulating unit (7) which is set up to load the connection unit (6) of the connection (4) with at least one external influencing variable in a targeted manner in such a way that the at least one property of the connection unit (6) is variable in a targeted manner in order to set the adhesion capability of the connection surface (5) of the connection unit (6), **characterized in that** the control and/or regulating unit (7) is set up to load the connection unit (6) in a targeted manner with the at least one external influencing variable in a manner which is dependent on a detected instantaneous acoustic behaviour of the motor vehicle.

2. Connection system (1) according to Claim 1, **characterized in that** the control and/or regulating unit (7) is set up to load the connection unit (6) in a targeted manner with the at least one external influencing variable in a manner which is dependent on a detected instantaneous or a predetermined driving state of the motor vehicle.

3. Method for the connection of at least two components (2, 3), in particular of a motor vehicle, having the steps:
- arranging and/or configuring of at least one connection unit (6) on one of the components (2, 3) which are not connected to one another, which connection unit (6) provides at least one connection surface (5), and by which connection unit (6) at least one property is variable by way of targeted loading with at least one external influencing variable in such a way that an adhesion capability of the connection surface (5) can be set;
- decreasing of the adhesion capability of the connection surface (5) to a predefined first level by way of targeted loading of the connection unit (6) with a predefined first value of the at least one external influencing variable;
- positioning of the components (2, 3) which are to be connected to one another in their respective connection positions relative to one another in such a way that the connection surface (5) makes direct contact with the respective other component (2, 3); and
- increasing of the adhesion capability of the connection surface (5) to a predefined second level which is greater than the first level by way of targeted loading of the connection unit (6) with a predefined second value of the at least one external influencing variable, the second value differing from the first value, **characterized**
- **in that**, after the successful connection of the components (2, 3) to one another, the connection unit (6) is loaded in a targeted manner with the at least one external influencing variable in a manner which is dependent on a detected instantaneous acoustic behaviour of the motor vehicle.

4. Method according to Claim 3, **characterized in that** the targeted loading of the connection unit (6) with a predefined first value of the at least one external influencing variable takes place in an active manner, and the targeted loading of the connection unit (6) with a predefined second value of the at least one external influencing variable takes place in a passive manner.

5. Method according to Claim 3 or 4, **characterized in that**, after the successful connection of the components (2, 3) to one another, the connection unit (6) is loaded in a targeted manner with the at least one external influencing variable in a manner which is dependent on a detected instantaneous or a predefined driving state of the motor vehicle.

## Revendications

1. Système d'assemblage (1) permettant d'assembler au moins deux composants (2, 3), en particulier d'un véhicule automobile, présentant
- au moins un assemblage (4) entre les composants (2, 3) qui présente au moins un composant (2, 3) et au moins une unité d'assemblage (6) disposée et/ou réalisée sur le composant (2, 3) et fournissant au moins une surface d'assemblage (5) de l'assemblage (4), au moins une propriété de l'unité d'assemblage (6) pouvant être modifiée de manière ciblée de telle sorte qu'une adhérence de la surface d'assemblage (5) est réglable, et
- au moins une unité de commande et/ou de réglage (7) qui est aménagée pour appliquer de manière ciblée à l'unité d'assemblage (6) de l'assemblage (4) au moins une grandeur d'influence externe de telle sorte que ladite au moins une propriété de l'unité d'assemblage (6) peut être modifiée de manière ciblée pour régler l'adhérence de la surface d'assemblage (5) de l'unité d'assemblage (6),
**caractérisé en ce que** l'unité de commande et/ou de réglage (7) est aménagée pour appliquer de manière ciblée à l'unité d'assemblage (6) ladite au moins une grandeur d'influence externe en fonction d'un comportement acoustique instantané détecté du véhicule automobile.

2. Système d'assemblage (1) selon la revendication 1, **caractérisé en ce que** l'unité de commande et/ou de réglage (7) est aménagée pour appliquer de manière ciblée à l'unité d'assemblage (6) ladite au moins une grandeur d'influence externe en fonction d'un état de conduite instantané détecté ou d'un état prédéterminé du véhicule automobile.

3. Procédé d'assemblage d'au moins deux composants (2, 3), en particulier d'un véhicule automobile, présentant les étapes consistant à :
- disposer et/ou réaliser sur l'un des composants (2, 3) non assemblés ensemble au moins une unité d'assemblage (6) qui fournit au moins une surface d'assemblage (5) et qui permet de modifier au moins une propriété par une application ciblée d'au moins une grandeur d'influence externe de telle sorte qu'une adhérence de la surface d'assemblage (5) est réglable ;
- diminuer l'adhérence de la surface d'assemblage (5) jusqu'à un premier niveau prédéterminé par une application ciblée d'une première valeur prédéterminée de ladite au moins une grandeur d'influence externe à l'unité d'assemblage (6) ;
- positionner les composants (2, 3) à assembler ensemble dans leurs positions d'assemblage respectives l'un par rapport à l'autre de telle sorte que la surface d'assemblage (5) entre en contact directement avec l'autre composant (2, 3) respectivement ; et
- augmenter l'adhérence de la surface d'assemblage (5) jusqu'à un deuxième niveau prédéterminé qui est supérieur au premier niveau par une application ciblée d'une deuxième valeur prédéterminée de ladite au moins une grandeur d'influence externe à l'unité d'assemblage (6), la deuxième valeur étant différente de la première valeur, **caractérisé**
- **en ce qu'**une fois les composants (2, 3) assemblés ensemble, ladite au moins une grandeur d'influence externe est appliquée de manière ciblée à l'unité d'assemblage (6) en fonction d'un comportement acoustique instantané détecté du véhicule automobile.

4. Procédé selon la revendication 3, **caractérisé en ce que** l'application ciblée d'une première valeur prédéterminée de ladite au moins une grandeur d'influence externe à l'unité d'assemblage (6) est effectuée activement, et l'application ciblée d'une deuxième valeur prédéterminée de ladite au moins une grandeur d'influence externe à l'unité d'assemblage (6) est effectuée passivement.

5. Procédé selon la revendication 3 ou 4, **caractérisé en ce qu'**une fois les composants (2, 3) assemblés ensemble, ladite au moins une grandeur d'influence externe est appliquée de manière ciblée à l'unité d'assemblage (6) en fonction d'un état de conduite instantané détecté ou prédéterminé du véhicule automobile.
